Europäisches Patentamt

European Patent Office

Office européen des brevets

(11) Publication number: **0 459 053 A1**

# EUROPEAN PATENT APPLICATION

(21) Application number: 90310159.0

(22) Date of filing: **17.09.90**

(51) Int. Cl.5: **A01K 93/00**

(30) Priority: **29.05.90 GB 9011926**

(43) Date of publication of application:
**04.12.91 Bulletin 91/49**

(84) Designated Contracting States:
**AT BE CH DE DK ES FR GB GR IT LI LU NL SE**

(71) Applicant: **Shirmer, Andrew**
**32 Latimer Drive, Steeple View, Laindon**
**Basildon, Essex, SS15 4AD(GB)**

(72) Inventor: **Shirmer, Andrew**
**32 Latimer Drive, Steeple View, Laindon**
**Basildon, Essex, SS15 4AD(GB)**

(74) Representative: **Lawrence, Malcolm Graham**
**et al**
**Hepworth, Lawrence, Bryer & Bizley 2nd**
**Floor Gate House South, West Gate**
**Harlow Essex CM20 1JN(GB)**

(54) **Improvements in and relating to fishing tackle.**

(57) A float adaptor to be used with a float and a line comprises two injection moulded plastics material portions 1 and 2 connected together by a plastics hinge 10a. A pillar 9 or portion 1 is receivable in a corresponding recess or hole 8 formed in the portion 2 whereby the two parts when hinged together so as to be juxtaposed in interfacial relationship are retained in such relationship with the line loop 12c of fishing line 12a, 12b, 12c sandwiched between the two portions 1 and 2. An end cap 11 receives the fishing line through its bore 11a at one end thereof whilst the end of the combined portions 1 and 2 is received in the other end of bore 11a as a means of urging a close and secure interfacial contact between the portions 1 and 2. A sleeve 13 comprises a length of tubular natural or synthetic rubber material and has one end received over the narrow cross-sectioned portion of a float 14 and the other similarly received over the float adaptor 10 at the end of the combined portions 1 and 2 opposed to end cap 11.

FIG.1

The invention relates to a float adaptor for use in fishing and to fishing tackle comprising such an adaptor.

Float adaptors are a well-known aid to freshwater fishing for fixing a float to a line in such a way that the float may be removed and changed for another without the need for breaking down the existing rig. There are various types available. To prevent movement on the line, these require the use of locking shot for holding position. Types are available which can stay in place without the use of locking shot but these tend to require as a precautionary measure the use of small locking shot.

Such locking shot has in the past conveniently been lead shot. Modern day fishing has, however, now changed by public demand for environmental reasons and uses non-toxic shot substitutes. These substitutes are as a rule larger than their equivalent size in lead. Bulking on a float in the normal fashion can put a large volume of shot at the base of the float and during the cast can cause the float to spin, causing a tangle. Additionally, when the float is cocked these shot can cause a lack of sensitivity in the float and quality of strike (ie contact between the angler and fish) during the bite. To overcome these problems anglers can use a "loaded float". This carries the bulk of the weight required to cock the float in its body and allows the use of less shot on the line to finally cock the float. Finally the new substitutes tend to be harder than lead and so when pinched on the line can cause bruising which at the base of the float during the cast can be critical, due to the pressure on the line.

According to the invention, fishing tackle comprises a float, a line and connection means for securing the float and line together wherein the connection means is secured to the float (eg by a coupling member) and comprises members which act independently of said float on a portion of the line for clamping thereof by said members to prevent displacement of the float lengthwise of the line. Conveniently, one of said members has an upstanding lug and the other has a socket therefor, the lug and socket being mated to secure the members in such relation to each other as to effect said clamping of said line. In any event, it is preferred that the members of the connection means clamp a loop of line, means (such as the lug just mentioned) being provided in preferred embodiments to penetrate into the loop so as to participate in line retention, particularly prior to imposition of the clamping effect.

Tackle according to the invention will preferably have a first condition in which said members effect clamping and a second condition in which said float is displaceable lengthwise of the line, means being provided for transition between said conditions. In preferred forms of the invention, the connection means comprises a pair of members hinged to each other to be pivotable between a position in which the line is clamped by interfacial juxtaposition of the members and a position in which the line is not so clamped. A socket-defining member may be provided and may have said members received removably in its socket, said socket-defining member acting to draw said so-received members together in clamping relationship with said line. Preferably, the socket and/or said members are so congifured as to urge drawing together of said members to an extent which increases with the extent to which said members are received in said socket.

The connection means is preferably secured to said float by means of a sleeve a portion of which is received (preferably removably) over said float and a portion of which has at least part of said members received (preferably removably) therein.

In a second of its aspects, the invention provides a float adapter comprising a pair of preferably elongate members hinged together at a hinge connecting an extremity of a first of said elongate members to an extremity of the second of said members, said members being pivotable between a closed condition wherein the members interface with their longitudinal axes parallel and aligned and preferably a lug of one member engages in a socket of the other (or other means to secure the interface operate and an open condition, a cap being provided to be received over the extremities of the interfacing members remote from the hinge to secure the members in closed condition. A resiliently radially expansible sleeve made eg of silicon rubber may be received over the other extremity of the assembly of those members and such a combination is specifically included within the scope of the invention as is the combination of a coupling sleeve with any of the other forms of said connection means described herein. Obviously, tackle as described earlier will conveniently comprise a float adaptor as just described.

A preferred embodiment of the invention will now be described, by way of example only, reference being made to the accompanying drawings in which:-

Figure 1 shows the combination of a float with a float adaptor according to the invention in assembled form;

Figure 2 is a view similar to Figure 1 but in exploded form;

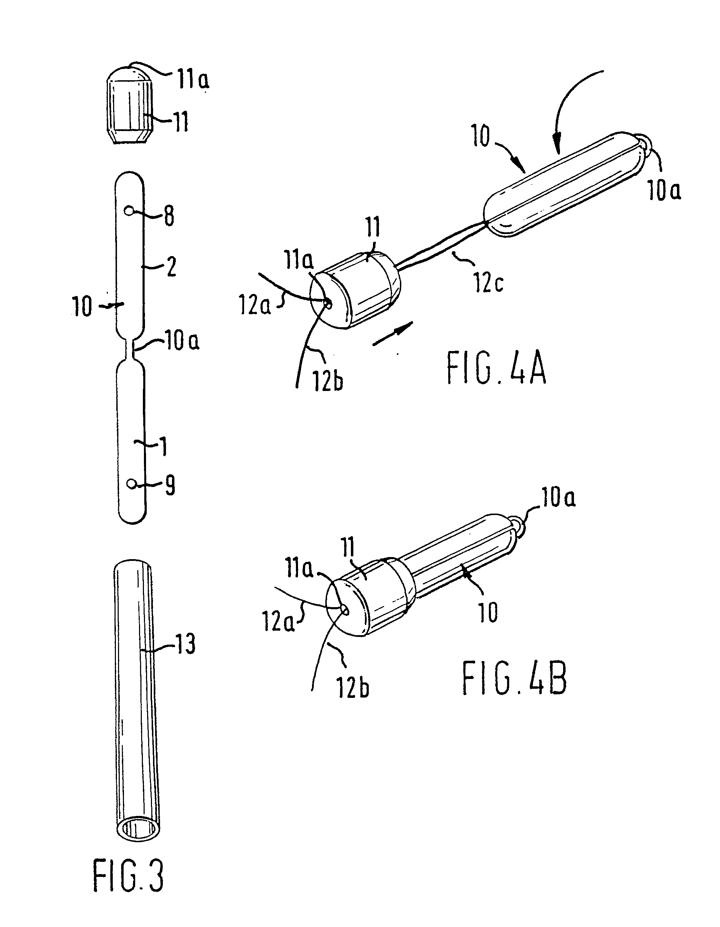

Figure 3 is a view similar to Figure 2 but showing part only of the fishing tackle and with the central component opened out to expose detail;

Figures 4a and 4b are similar to Figure 2 but show part only of the fishing tackle;

Figure 5 illustrates assembly of the parts of the fishing tackle; and

Figure 6 further illustrates assembly of the parts of the fishing tackle.

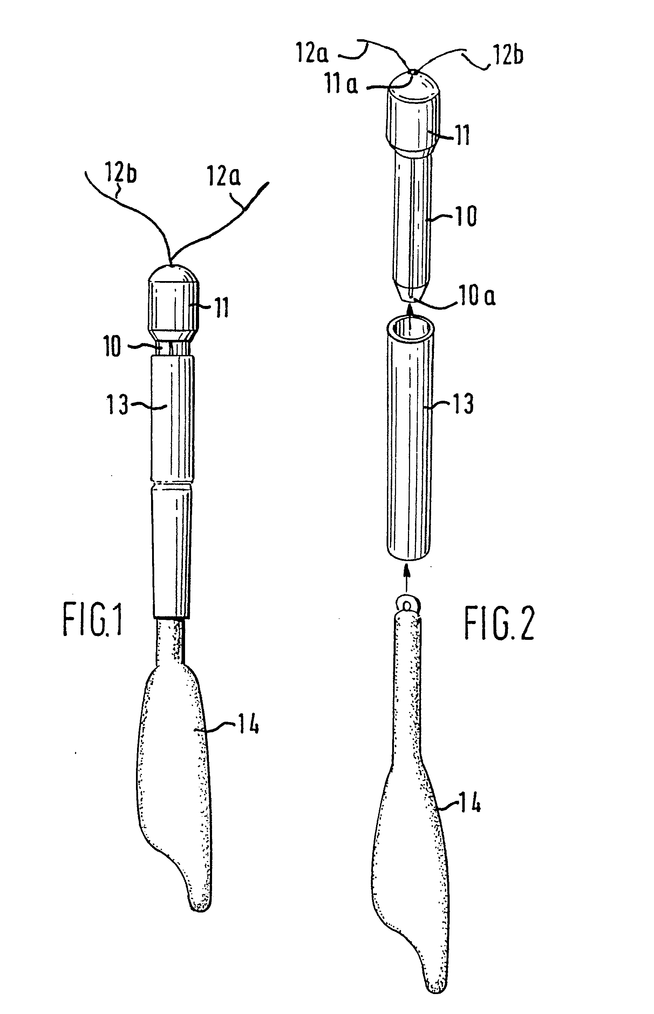

The fishing tackle shown in the figures comprises a float 14 (Figures 1 and 2 only), a connecting sleeve 13, a float adaptor shown generally at 10 and a fishing line 12a, 12b, 12c.

The float 14 may be any conventional float as used in angling provided that a portion thereof is suitable for connection by means of sleeve 13 to the float adaptor 10.

Sleeve 13 comprises a length of tubular natural or synthetic rubber material. One end of the sleeve 13 is received over a narrow cross-sectioned portion of float 14 and is retained thereon by the resilience of the material of the sleeve 13. The other end of sleeve 13 is similarly received over the float adaptor 10. The connection of the float 14 to the float adaptor 10 is such that flexibility of the sleeve 13 enables bending of the whole assembly.

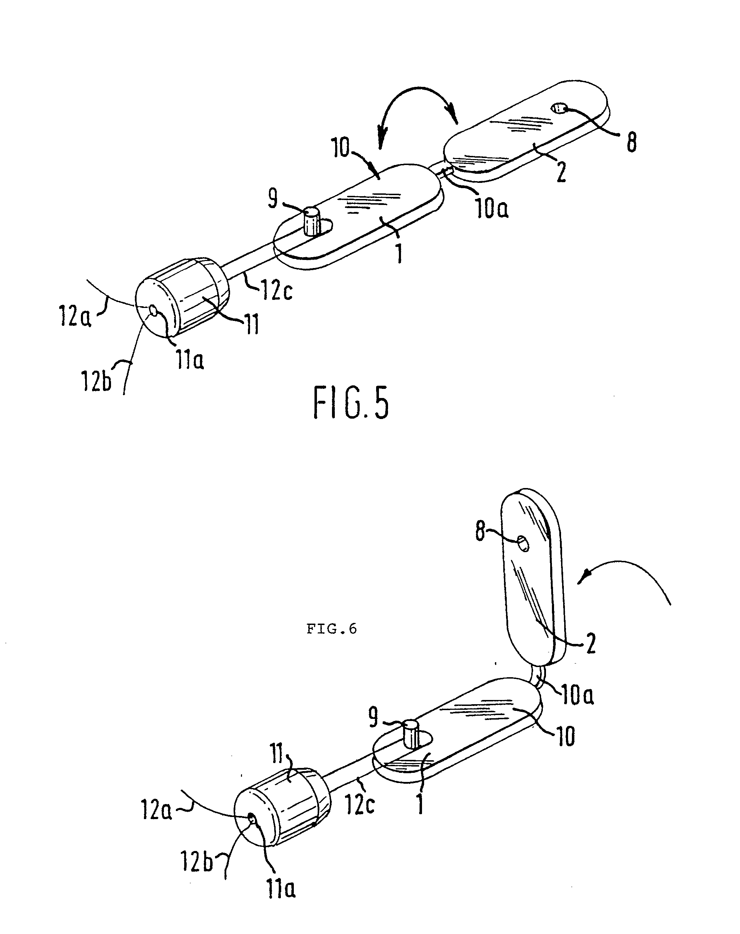

Float adaptor 10 comprises an injection moulded plastics material having two portions 1 and 2 connected together by a plastics hinge 10a. The plastics material may be polypropylene, polyethylene or a nylon such as nylon 6,6 preferably reinforced with glass fibre reinforcement present in an amount of eg 33% by weight. Portion 1 is formed with a pillar 9 receivable in and complimentary with a recess 8 formed in the part 2. Each part 1, 2 has a semi-circular cross section and the two are hingable as indicated by the arrow in Figure 5 and further illustrated by Figure 6 so as to bring their planar faces into juxtaposed interfacial relationship. In this condition, the pillar 9 is received in recess 8 as a force or locating fit to retain the two planar faces in the above-described relation or recess 8 simply accommodates pillar 9 without retention of pillar 9 therein.

Float adaptor 10 further comprises an end cap 11 which may be made of metallic material but which is normally made of the same material as the parts 1 and 2 described above. End cap 11 is formed with a central through-bore 11a which has a uniform circular cross-section over most of its length but is provided with a relatively narrow cross-sectioned portion at one end. The parts 1 and 2 described above are receivable when interfaced into the larger cross-sectioned portion of the bore 11a. This portion in preferred forms of the float adaptor will in fact have a non-uniform cross-section which tapers towards the narrow part of the bore 11a referred to above. In this way, increasing penetration of the parts 1 and 2 combined into the bore 11a urges the two parts 1 and 2 together.

As best seen from Figures 5 and 6 of the drawings, a fishing line 12a originating from an angler's rod and reel passes through the bore 11a to form a line loop 12c which encircles the pillar 9 of the part 1. A continuation of the fishing line 12b extends through the bore 11a in the reverse direction and carries near its end further fishing tackle items such as hooks, line feeders and such like according to the desire and judgement of the angler.

It will be appreciated from the above that the float can be placed relative to the line in any desired position so that the length of line beneath the float can be determined by the angler according to choice. If the angler requires that the length of line beneath the float should be reduced or increased, it is an easy matter for him manually to remove end cap 11 from the balance of the float adaptor. It should then be possible simply to adjust the length of line by suitable application of manual force, perhaps after urging open the two parts 1 and 2 of the float adaptor so that they cease to clamp the line therebetween about the pillar 9 so tightly as to prevent line movement. The float adaptor acts in relation to the line independently of the float, and line adjustment thus takes place independently thereof. The virtual universality of the sleeve 13 enables one float to be changed for another without otherwise disturbing the overall assembly and indeed the float adaptor in accordance with the invention is capable of addressing approximately 90% of freshwater angling floats available in the market place at the present time.

Because the plastics material of which the parts 1 and 2 are made is soft, the line 12c can be clamped therebetween without damage such as occurs when fixture of a float relative to a line is achieved by means of lead shot or lead-substitute shot.

The invention as described earlier without reference to the drawings may include any one or more features of the invention as described with reference to the drawing.

## Claims

1. Fishing tackle comprising a float having a shank- or shaft-like stem, a coupling sleeve which has said stem, received therein, a line and connection means received in said sleeve with said stem for securing the float and line together, wherein the connection means comprises members which act on a portion of the line for clamping thereof by said members to prevent displacement of the assembly of float, coupling sleeve and connection means along the line.

2. Fishing tackle as claimed in Claim 1 wherein one of said members has an upstanding lug and the other has a socket therefor, the lug and socket being mated to secure the members in such relation to each other as to effect said clamping of said line.

3. Fishing tackle as claimed in Claim 1 or Claim 2 wherein the connection means has a first condition in which said members effect clamping and a second condition in which said float is displaceable lengthwise of the line, means being provided for transition between said conditions.

4. Fishing tackle as claimed in any one of Claims 1 to 3 wherein said connection means operates to effect said clamping by acting upon at least one of said members so that they undergo drawing together in a sandwiching action without relative rotation as between the confronting surface of one said member and that of the other said member and wherein said connection means includes means for maintaining said members sandwiched together in clamping condition with said line.

5. Fishing tackle as claimed in any preceding claim wherein the members are comprised at least in line-contacting portions thereof of an optionally filled or reinforced plastics material which is sufficiently soft as to ensure non-damaging clamping of said line.

6. Fishing tackle as claimed in Claim 5 wherein said plastics material is high density polyethylene, a polyamine or polypropylene.

7. Fishing tackle as claimed in Claim 6 wherein said polyamine is nylon 6,6.

8. Fishing tackle as claimed in any preceding claim wherein the connection means comprises a pair of members hinged to each other so as to be pivotable between a position in which the line is clamped by interfacial juxtaposition of the members and a position in which the line is not so clamped.

9. Fishing tackle as claimed in any preceding claim wherein a socket-defining member has said members received removably in its socket, said socket-defining member acting to draw said so-received members together in clamping relationship with said line.

10. Fishing tackle as claimed in Claim 9 wherein said socket and/or said members are so congifured as to urge drawing together of said members to an extent which increases with the extent to which said members are received in said socket.

11. Fishing tackle as claimed in any preceding claim wherein said connection means is secured to said float by means of a sleeve a portion of which is received over said float and a portion of which has at least part of said members received therein.

12. Fishing tackle as claimed in any preceding claim wherein said sleeve comprises a length of soft resilient plastics material tubing.

13. Fishing tackle as claimed in Claim 12 wherein said sleeve comprises a length of silicon rubber tubing.

14. A float adapter comprising a pair of elongate members hinged together at a hinge connecting an extremity of a first of said elongate members to an extremity of the second of said members, said members being pivotable between a closed condition wherein the members interface with their longitudinal axes parallel and aligned and a lug of one member engages in a socket of the other and an open condition, a cap being provided to be received over the extremities of the interfacing members remote from the hinge to secure the members in closed condition.

FIG.1

FIG.2

FIG.3

FIG.4A

FIG.4B

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 916 850 (DODGE)<br>* column 4, line 13 - column 5, line 3; figures 1,9,10 * * | 1,3,4,5,8,<br>11,14 | A 01 K 93/00 |
| A | US-A-4 852 292 (PEASE)<br>* the whole document * * | 1-5,7,<br>8-10 | |
| A | US-A-3 949 513 (DMYTRIW) | | |
| A | GB-A-1 542 973 (WOODCOCK) | | |
| A | US-A-3 140 520 (MARINO) | | |
| A | US-A-3 023 535 (HOLKA) | | |

| | |
|---|---|
| | TECHNICAL FIELDS SEARCHED (Int. Cl.5) |
| | A 01 K |

The present search report has been drawn up for all claims

| Place of search | Date of completion of search | Examiner |
|---|---|---|
| The Hague | 21 August 91 | VERDOODT S.J.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document